# EUROPÄISCHE PATENTSCHRIFT

(11) **EP 1 759 806 B1**
(45) Veröffentlichungstag und Bekanntmachung des Hinweises auf die Patenterteilung: **26.10.2011**
(21) Anmeldenummer: 05019339.0
(22) Anmeldetag: 06.09.2005
(51) Int. Cl.: B23K 35/02, B23K 35/30, F01D 5/00, B23P 6/04

(54) **Verfahren zur Reparatur eines Risses mittels Hartlöten**
Brazing process for repairing a crack
Procédé de brasage pour la réparation d'une fissure

(43) Veröffentlichungstag der Anmeldung: 07.03.2007
(73) Patentinhaber: SIEMENS AKTIENGESELLSCHAFT, 80333 München (DE)
(72) Erfinder: Jungbluth, Matthias, Dr., 12681 Berlin (DE); Steinbach, Jan, Dr., 13353 Berlin (DE); Wilkenhöner, Rolf, Dr., 14532 Kleinmachnow (DE)

(56) Entgegenhaltungen:
- EP-A- 1 258 545
- US-A- 5 666 643
- US-A- 5 964 963
- US-A1- 2004 050 913

## Beschreibung

Die Erfindung betrifft ein Verfahren zur Reparatur eines Risses in einem ein Basismaterial aufweisendes Bauteil, insbesondere in einer Gasturbinenschaufel, wobei eine Suspension, die eine Trägerflüssigkeit sowie mindestens einen Feststoff in Form von Nanoteilchen aufweist, auf die zu reparierende Stelle aufgetragen wird und wobei eine Wärmebehandlung des Bauteiles durchgeführt wird, wobei der Feststoff in Form von Nanoteilchen aufgeschmolzen wird und eine Verbindung mit dem Basismaterial ausgebildet wird.

Stark belastete Bauteile, wie etwa Turbinenschaufeln, unterliegen während des Betriebs einer hohen thermischen und mechanischen Beanspruchung, die zu Materialermüdungen und infolgedessen zu Rissen führen kann. Da das Herstellen von Bauteilen die im Betrieb einer sehr hohen Temperatur ausgesetzt sind, wie z.B. Bauteile einer Gasturbine, relativ kostspielig ist, ist man in der Regel bemüht, derartige Bauteile nach Eintritt von Schädigungen zu reparieren. Damit wird die Funktionstüchtigkeit wieder hergestellt und das Bauteil für eine weitere Revisionsperiode einsetzbar.

Außerdem kommen heutzutage immer öfter Materialien zum Herstellen von Bauteilen von Turbinen zum Einsatz, die eine gerichtete Mikrostruktur anstatt einer polykristallinen Struktur aufweisen, denn diese Materialien besitzen vor allem im Hochtemperaturbereich bessere Materialeigenschaften. Die Reparatur solcher Bauteile ist dennoch dadurch erschwert, dass bei einer Wärmebehandlung des Materials die Gefahr besteht, dass die reparierte Stelle nicht mehr eine gerichtete Mikrostruktur aufweisen wird.

Eine Möglichkeit der Reparatur beschädigter Bauteile ist beispielsweise Schweißen. Schweißverfahren sollten jedoch bei der Reparatur stark belasteter Bauteile, insbesondere bei solchen die eine gerichtete Struktur aufweisen, vermieden werden, denn sie schmelzen das Basismaterial des Bauteils auf. Strukturell tragende Bereiche eines Bauteils dürfen daher nicht geschweißt werden, da aufgrund des Aufschmelzens des Basismaterials die Integrität der gerichteten Struktur verloren ginge.

Eine weitere Möglichkeit der Reparatur beschädigter Bauteile ist das Löten. Bei den konventionellen Lötverfahren wird ein Lot im Bereich der Beschädigung auf das Basismaterial aufgebracht und mittels Wärmeeinwirkung mit dem Basismaterial verbunden. Nach dem Löten weist die Lötstelle bei der bisher üblichen Verfahrensweise jedoch schlechtere Materialeigenschaften als das umgebende Basismaterial auf, z.B. weist sie keine gerichtete Mikrostruktur auf.

In der US 2004/0050913 A1 ist ein weiteres Verfahren zur Reparatur einer Komponente einer Gasturbine mittels eines Lotes mit in einer Trägerflüssigkeit dispergierten Nano-Partikeln beschrieben. Auf die gereinigte Oberfläche der zu reparierenden Stelle wird das Lot aufgebracht und die Komponente wird bei einer Temperatur von etwa 2 120° F (1433° C) in einem Vakuum von 0,3 Pa vier Stunden lang wärmebehandelt, wobei bei etwa 800° F (700° K) und 1600° F (1144° K) die Temperaturerhöhung für 10 Minuten angehalten wird. Anschließend wird die Temperatur mittels eines Inertgases reduziert, 20 min bei 1000° F (811° K) gehalten und danach wird die Komponente auf Raumtemperatur abgekühlt. Während der Wärmebehandlung schmelzen die Nano-Partikel bei einer Temperatur, die deutlich niedriger ist als die Schmelztemperatur der beim Löten üblicherweise verwendeten Microteilchen. Somit wird auf die Zugabe von Schmelzpunkterniedrigern verzichtet, welche bei den meisten Lötverfahren zur Reparatur von Gasturbinen zugegeben werden müssen und welche die Materialeigenschaften der reparierten Stelle verschlechtern.

Der vorliegenden Erfindung liegt die Aufgabe zugrunde eine verbesserte Wärmebehandlung zur Reparatur eines Risses in einem Bauteil anzugeben.

Diese Aufgabe wird erfindungsgemäß gelöst durch ein Verfahren mit den Merkmalen des Anspruchs 1.

Bei einer Wärmebehandlung eines Materials bei sehr hohen Temperaturen treten unerwünschte Veränderungen in der Struktur des Materials auf. Deswegen ist es besonders vorteilhaft, dass bei der Reparatur eines Bauteils der Wärmeeintrag ins Bauteil niedrig gehalten wird. Dies wird mit Hilfe eines kurzfristigen Wärmestoßes erreicht, d.h. die Temperatur bei der Wärmebehandlung wird schlagartig erhöht und kurze Zeit auf dem höheren Temperaturniveau gehalten. Während des Wärmestoßes findet der Schmelzvorgang der Nanoteilchen der Suspension statt und eine Verbindung mit dem Basismaterial wird gebildet.

Ein weiterer wesentlichster Vorteil dieser Ausgestaltung ist darin zu sehen, dass aufgrund der Nano-Größe der Teilchen in der Suspension eine Absenkung des Schmelzpunktes dieser Teilchen stattfindet. Dies wird mit der niedrigeren Aktivierungsenergie zum Freisetzen von Atomen auf der Oberfläche eines Teilchens in Nano-Größe im Vergleich mit einem größeren Teilchen erklärt. Somit gestatten die Nanoteilchen eine Wärmebehandlung des Bauteils bei einer Temperatur, bei der nur das Nanopulver aufschmilzt und die Struktur des Basismaterials sich nicht verändert. Ein weiterer Vorteil, der sich aus der Erniedrigung der Schmelztemperatur der Nanoteilchen ergibt, ist dass beim Verwenden von Nanoteilchen auf einen Schmelzpunkterniedriger, der üblicherweise Sprödphasen in der reparierten Stelle entstehen lässt, verzichtet wird oder zumindest wird seine Menge im Lot deutlich verringert.

Aufgrund der physikalischen Eigenschaften der Nanoteilchen ist außerdem der Erfolg bei der kurzen Wärmebehandlung bei sehr hoher Temperatur gesichert. Nanoteilchen weisen ein sehr großes Oberflächen/Volumen-Verhältnis auf und schmelzen dadurch schneller als konventionelle Pulver. Besonders bei Bauteilen dessen Basismaterial eine gerichtete Mikrostruktur aufweist, ist diese kürzere Wärmebehandlung von großer Bedeutung, denn somit wird die Gefahr der Rekristallisation verringert.

Nanoteilchen können aufgrund ihrer Partikelgröße nicht direkt über einen Pulverförderer zugeführt werden, denn sie würden sich sehr breit streuen. Deswegen stellt ihr Dispergieren in einer Trägerflüssigkeit eine sehr gute Möglichkeit dar, um die Nanoteilchen wirksam auf die zu reparierende Stelle aufzubringen. Die Fließeigenschaften der somit entstandenen Suspension können ausgenutzt werden, um die Nanoteilchen tief in den Riss eindringen zu lassen. Dank der Kapillarkräfte der Suspension sind die Nanoteilchen sogar in der Lage in sehr enge Abzweigungen des Risses einzudringen und sie aufzufüllen.

Vorzugsweise wird bei dem Wärmestoß die Maximaltemperatur während der Wärmebehandlung erreicht, welche Maximaltemperatur unter der Schmelztemperatur des Basismaterials liegt. Die Maximaltemperatur ist so gewählt, dass die Nanoteilchen während des Wärmestoßes aufschmelzen und eine stabile und sichere Verbindung mit dem Basismaterial herstellen. Allerdings verursachen die Vorgänge, die zur Aggregatzustandsänderung der Nanoteilchen führen, keine Verflüssigung des Basismaterials. Die Struktur des Basismaterials wird durch diese Vorgänge nicht beeinträchtigt und das reparierte Bauteil kann weiterhin die hohen Anforderungen bei seinem Einsatz erfüllen.

Bevorzugt ist die Maximaltemperatur während der Wärmebehandlung zwischen 50° K und 100° K unter der Schmelztemperatur des Basismaterials. Die Maximaltemperatur ist vom Material der Nanoteilchen abhängig und ist so gewählt, dass bei dieser Temperatur die aufschmelzen und eine stoffschlüssige Verbindung zum Basismaterial stattfindet.

Weiter ist die Dauer des Wärmestoßes kleiner als 30 min und liegt insbesondere zwischen 5 min und 10 min. In Kombination mit einer geeigneten Maximaltemperatur wird ein kurzfristiger Wärmestoß durchgeführt, der keine wesentliche Beeinträchtigung des Gefüges des Basismaterials verursacht.

In einer bevorzugten Ausführung wird beim Wärmestoß eine Temperaturerhöhung um bis zu 100° K und insbesondere zwischen 30° K und 70° K vorgenommen. Erfahrungsgemäß hat sich eine Temperaturerhöhung in dieser Größenordnung als besonders geeignet erwiesen.

Zweckdienlicherweise wird der Wärmestoß nach Erreichen einer Temperatur im Bereich der Lösungsglühtemperatur durchgeführt. Die Lösungsglühtemperatur für austenitische Stähle ist ca. 1273° K bis 1373°K.

Vorteilhafterweise besteht der Stoff in Form von Nanoteilchen aus dem gleichen Material wie das Basismaterial. Dies ist die beste Voraussetzung für eine sichere Verbindung der Nanoteilchen mit dem Basismaterial, denn beide weisen quasi die selben Eigenschaften und Struktur auf.

Bevorzugt weisen die Nanoteilchen eine Größe von maximal 100nm auf. Dadurch sind die Nanoteilchen imstande, in sehr enge Risse einzudringen, insbesondere in solche, welche eine Rissweite im Bereich zwischen 10µm und 100µm aufweisen. Diese Rissweite ist deutlich geringer die minimale Weite der Risse, die mittels konventionellen Techniken wirkungsvoll repariert werden können. Dank der Kapillarkräfte der Suspension dringen die Nanoteilchen innerhalb des Risses weiter in seine Abzweigungen ein und sorgen für ein vollständiges Auffüllen des Risses.

Vorzugsweise wird als Trägerflüssigkeit eine organische Lösung eingesetzt. Besonders geeignet hierbei sind Alkohole - Ethanol, Propanol, etc. Wasser ist ebenfalls als Trägerflüssigkeit geeignet. Ausschlaggebendes Kriterium bei der Zusammensetzung der Suspension ist, dass die Trägerflüssigkeit mit dem Basismaterial, bzw. mit den Nanoteilchen weder chemisch reagiert noch zu einer Oxidation oder Korrosion führt. In einer solchen Suspension sind die Nanoteilchen gut vor Umwelteinflüssen geschützt. Beim Aufheizen des Bauteils verdampft die organische Trägerflüssigkeit sehr schnell und hat somit keinen Einfuß auf das Herstellen der stoffschlüssigen Verbindung zwischen den Nanoteilchen und dem Basismaterial.

In einer vorteilhaften Ausführung ist der Volumenanteil der Nanoteilchen in der Suspension über 50%. Dadurch wird ein hoher Anteil an Basismaterial mittels der Suspension in den Riss eingebracht.

In einer weiteren vorteilhaften Ausführung weist die Suspension ein Netzmittel auf. Das Netzmittel, auch Dispergiermittel genannt, wird zur Suspension zugegeben, um eine bessere Verteilung des Nano-Feststoffes in der Trägerflüssigkeit hervorrufen und um eine Agglomeration der Nanoteilchen in der Suspension zu vermeiden. Das Netzmittel benetzt die Oberfläche der Nanoteilchen und erleichtert ihr Dispergieren in der Trägerflüssigkeit, indem sie die Grenzflächenspannung zwischen Feststoff und Flüssigkeit erniedrigt. Als Netzmittel werden beispielsweise Tenside verwendet. Das Netzmittel verdampft ebenfalls in einem frühen Stadium der Wärmebehandlung.

Zweckdienlicherweise ist der Massenanteil am Netzmittel in der Suspension zwischen 0,1 g/l und 1 g/l, insbesondere zwischen 0,2 g/l und 0,6 g/l.

Die weitere Erläuterung des Verfahrens erfolgt anhand der Zeichnung. Die zwei Figuren zeigen:
- FIG 1: ein Riss aufgefüllt mit einer Nanoteilchen aufweisenden Suspension,
- FIG 2: eine detaillierte Beschreibung der Verfahrensschritte anhand einer Blockschema,
- FIG 3: eine Turbinenschaufel,
- FIG 4: eine Brennkammer und
- FIG 5: eine Gasturbine.

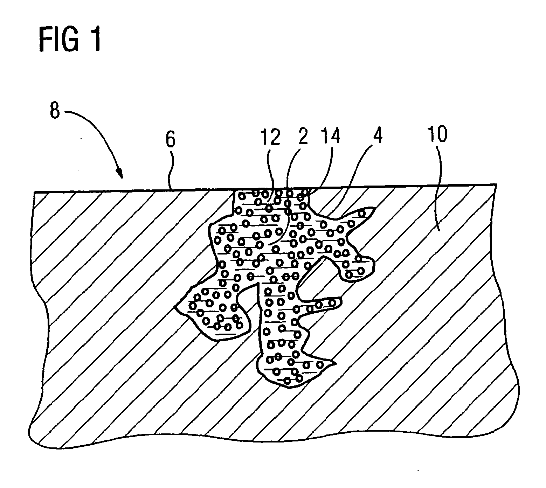

In Figur 1 ist ein mit einer Suspension 2 aufgefüllten Riss 4 gezeigt.

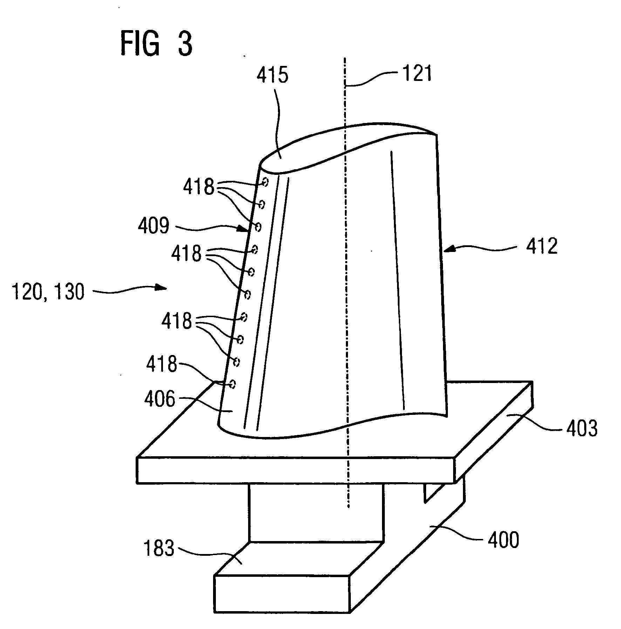

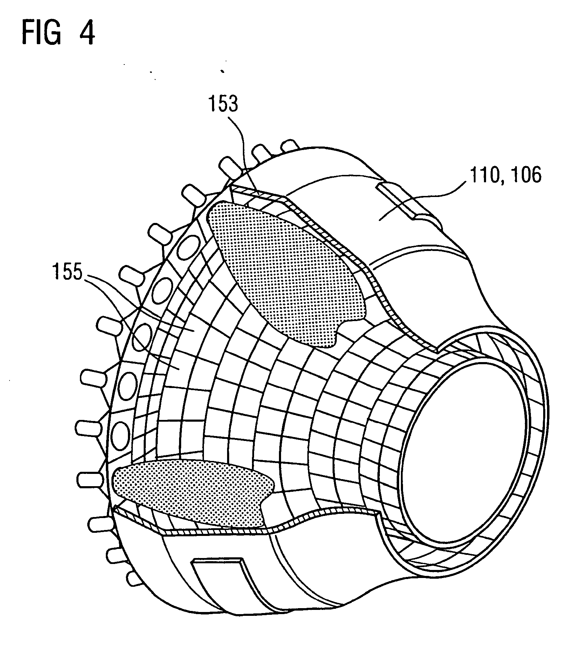

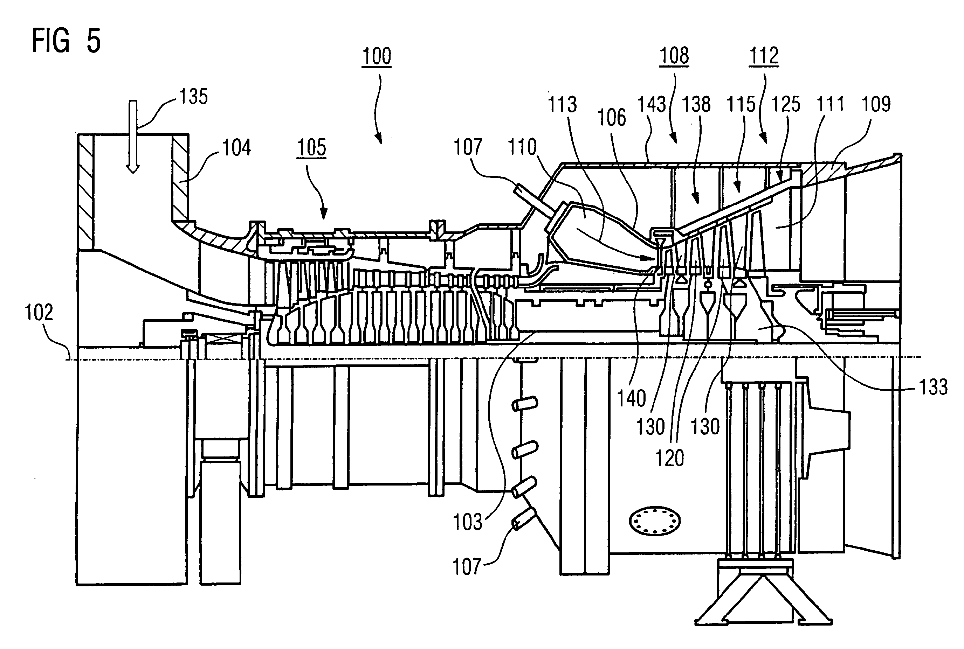

Der Riss 4 ist an der Oberfläche 6 eines aus einem Basismaterial 10 gebildeten Bauteils 8 (Brennkammerelement 155 (Fig. 4) oder Gehäuse 138(Fig. 5)), in diesem Ausführungsbeispiel eine Turbinenschaufel 120, 130 (Fig. 3), und weist eine unregelmäßige verzweigte Form auf. Das Basismaterial 10 ist eine Metalllegierung mit einem polykristallinen Gefüge oder einer gerichteten Mikrostruktur. Die Suspension 2 umfasst eine Trägerflüssigkeit 12 aus Alkohol oder Wasser und eine Mehrzahl an Nanoteilchen 14, die aus dem gleichen Material wie das Basismaterial bestehen und in der Trägerflüssigkeit 12 dispergiert sind.

Die Nanoteilchen 14 weisen eine Größe zwischen 50nm und 100nm auf und können somit in mehreren Fraktionen mit unterschiedlichen Partikelgrößen aufgeteilt werden. Durch Mischen mehrerer Fraktionen wird eine Verbesserung des Füllstandsgrades des Risses 4 erreicht, denn so passen die Nanoteilchen 14 der kleineren Fraktionen in die Zwickel der größeren Fraktionen. Um eine Agglomeration der Nanoteilchen 14 zu verhindern, ist ihre Oberfläche mit einem Netzmittel, wie z.B. Tenside, benetzt.

Zu der Suspension 2 kann auch ein Lotzusatzstoff zugegeben werden. Die Zugabe eines konventionellen Lotzusatzstoffes ist vor allem dann erwünscht, wenn die Temperaturspanne zwischen der Schmelztemperatur des Basismaterials 10 und der Schmelztemperatur der Nanoteilchen 14 nicht sehr groß ist und die Dauer des Wärmestoßes kurz sein soll. Während der Wärmebehandlung wird der Lotzusatzstoff als erster aufschmelzen und eine Verbindung zwischen den Nanoteilchen 14 und dem Basismaterial 10 bilden. Auch wenn die Nanoteilchen 14 beim Wärmestoß nicht vollständig schmelzen würden, würde es eine stoffschlüssige Verbindung zwischen der Füllung im Riss 4 und dem Basismaterial 10 des Bauteils 8 geben. Als Lotzusatzstoff können alle Metalle oder Metalllegierungen eingesetzt werden dessen Schmelzpunkt niedriger ist als der der Nanoteilchen 14 und höher ist als die Betriebstemperatur des Bauteils 8.

Weiterhin ist es möglich, Schmelzpunkterniedriger zur Suspension 2 zuzugeben. Durch die Verwendung von Schmelzpunkterniedriger wie z.B. Bor, wird eine noch niedrigere Schmelztemperatur der Nanoteilchen 14 bei der Reparatur des Bauteils 8 erreicht und dadurch das Basismaterial 10 intakt gehalten.

Da die Nanoteilchen 14 aufgrund ihrer physikalischen Eigenschaften eine Verringerung des Wärmeeintrags während der Reparatur hervorrufen, kann bei einer ausreichenden Temperaturspanne zwischen der Schmelztemperatur der Nanoteilchen 14 und der Schmelztemperatur des Basismaterials 10 auf einen Lotzusatzstoff und einen Schmelzpunkterniedriger verzichtet werden.

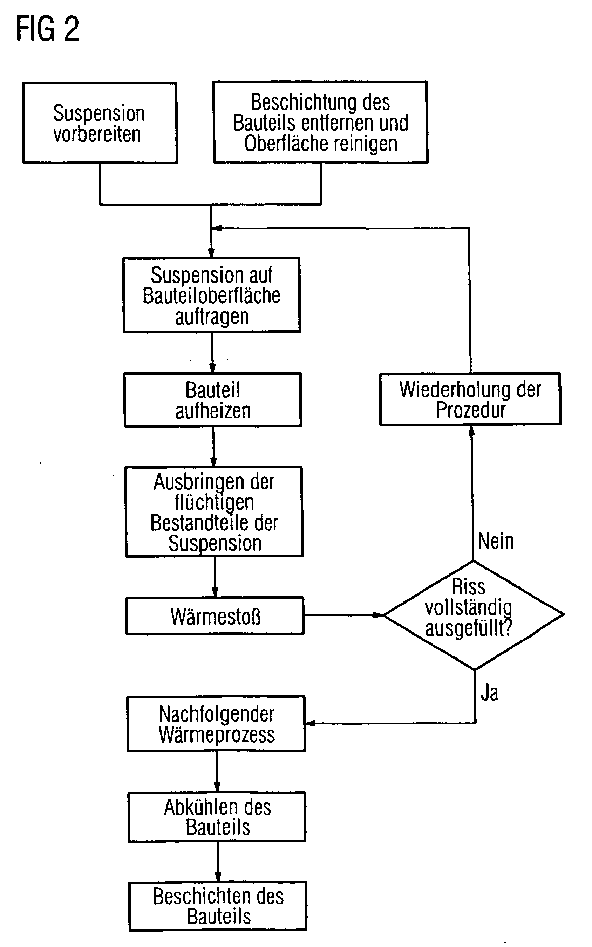

Um eine sichere und wirkungsvolle Reparatur des beschädigten Bauteils mittels der Suspension 2 gemäß FIG 1 zu gewähren, muss die Instandsetzung in einer speziellen Art und Weise prozessiert werden, welche detailliert in Form eines Blockschemas in FIG 2 gezeigt ist.

Zunächst wird die Suspension 2 aus der Trägerflüssigkeit 12 und den Nanoteilchen 14, die sich nicht in der Trägerflüssigkeit 12 lösen oder mit ihr chemisch verbinden, bereitgestellt.

Vor dem Auftragen der Suspension 2 auf die Oberfläche 6 des Bauteils 8 wird die vorhandene Beschichtung entfernt und die Oberfläche 6 auf eine geeinigte Weise gereinigt.

Die Suspension 2 wird auf die beschädigte Stelle aufgetragen und sie dringt aufgrund der Gravitationskräfte in den Riss 4 ein. Der Riss 4 weist viele Abzweigungen und Vertiefungen im Mikrobereich auf, in welche die Suspension 2 dank ihrer Kapillarkräfte eindringt und somit den Riss. 4 vollständig auffüllt. Die Ausnutzung der Kapillarkräfte um alle kleinen Vertiefungen der beschädigten Oberfläche zu erreichen ist ein sehr großen Vorteil dieses Verfahrens gegenüber anderen herkömmlichen Reparaturverfahren, bei denen ein Pulver über einen Pulverförderer eingeführt wird oder eine pulveraufweisende Paste über den Riss aufgetragen wird, die aber zähflüssiger ist als die Suspension 2 und keine besonders gute Fließeigenschaften aufweist.

In einem nächsten Schritt wird das Bauteil 8 in einem Vakuumofen eingebracht, wo durch Abpumpen oder Spülen mit Schutzgas zunächst die Luft aus dem Ofen entfernt wird. Es wird ein geeignetes Temperaturprogramm gewählt und der Vakuumofen wird aufgeheizt, wobei die Trägerflüssigkeit 12 und Netzmittel verdampfen und die Füllung des Risses 4 verdichtet wird.

Nach Erreichen etwa der Lösungsglühtemperatur des Basismaterials 10 wird das Bauteil 8 einem Wärmestoß von etwa 5 bis 10 min ausgesetzt, bei dem die Temperatur schlagartig um etwa 50°K erhöht wird. Bei diesem Wärmestoß wird die Maximaltemperatur während der Wärmebehandlung erreicht, die höher als die Betriebstemperatur des Bauteils 8 ist, aber immer noch um ca. 60° K unter der Schmelztemperatur des Basismaterials 10 liegt. Dabei muss beachtet werden, dass der Schmelzpunkt der Nanoteilchen in diesem Temperaturintervall liegen. Die Nanoteilchen, deren physikalischen Eigenschaften aufgrund ihrer Größe verändert sind, schmelzen bereits bei der Maximaltemperatur auf und bilden eine wirkungsvolle Verbindung zum Basismaterial. Beim Wärmestoß ist ein möglichst gleichmäßiges Aufheizen aller Nanopartikel von großem Vorteil, denn dadurch schmelzen sie alle etwa gleichzeitig und die Dauer des Wärmestoßes kann gekürzt werden.

Es ist möglich, dass nach dem Eindringen der Suspension 2 in den Abzweigungen des Risses und ihr Verdichten nach dem Verdampfen der Trägerflüssigkeit 12 sich die Füllung zum Rissgrund abgesetzt hat und der Riss 4 nicht völlig aufgefüllt ist. In diesem Fall wird erneut Suspension 2 aufgetragen und die Wärmebehandlung einschließlich des Wärmestoßes wird wiederholt.

Bei einem vollständigen Auffüllen des Risses 4 wird die reparierte Stelle mit Wärme nachbehandelt, um ein Homogenisieren des Gefüges zu erreichen.

Nach Abkühlen des Bauteils 8 wird es erneut beschichtet und ist somit wieder einsatzfähig.

Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus ZrO₂, Y₂O₄-ZrO₃, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 einer Gasturbine 100 (Fig. 5).
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrA1X kann noch eine beispielsweise keramische Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 5 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur Reparatur eines Risses (4) in einem ein Basismaterial (10) aus einer metallischen Legierung aufweisenden Bauteil (8),
insbesondere in einer Gasturbinenschaufel,
umfassend die folgenden Schritte:
- eine Suspension (2), die eine Trägerflüssigkeit (12) sowie mindestens einen Feststoff in Form von Nanoteilchen (14) aufweist, wird auf die zu reparierende Stelle aufgetragen,
- eine Wärmebehandlung des Bauteiles wird durchgeführt, wobei der Feststoff in Form von Nanoteilchen (14) aufge schmolzen wird und eine Verbindung mit dem Basismaterial ausgebildet wird,
**dadurch gekennzeichnet,**
**dass** während der Wärmebehandlung das Bauteil (8) einem Wärmestoß ausgesetzt wird und
**dass** die Dauer des Wärmestoßes kleiner 30 min ist und insbesondere zwischen 5 min und 10 min liegt.

2. Verfahren nach Anspruch 1,
**dadurch gekennzeichnet, dass**
bei dem Wärmestoß die Maximaltemperatur während der Wärmebehandlung erreicht wird,
welche Maximaltemperatur unter der Schmelztemperatur des Basismaterials (10) liegt.

3. Verfahren nach Anspruch 2,
**dadurch gekennzeichnet, dass**
die Maximaltemperatur bei der Wärmebehandlung zwischen 50°K und 100°K unter der Schmelztemperatur des Basismaterials (10) liegt.

4. Verfahren nach einem der vorhergehenden Ansprüche,
**dadurch gekennzeichnet, dass**
die Temperaturdifferenz beim Wärmestoß eine Temperaturerhöhung um bis zu 100°K und insbesondere im Bereich zwischen 30°K und 70°K vorgenommen wird.

5. Verfahren nach einem der vorhergehenden Ansprüche,
**dadurch gekennzeichnet, dass**
der Wärmestoß nach Erreichen einer Temperatur im Bereich der Lösungsglühtemperatur durchgeführt wird.

6. Verfahren nach Anspruch 1,
**dadurch gekennzeichnet, dass**
der Feststoff in Form von Nanoteilchen (14) aus dem gleichen Material wie das Basismaterial (10) besteht.

7. Verfahren nach einem der vorhergehenden Ansprüche,
**dadurch gekennzeichnet, dass**
die Nanoteilchen (14) eine Größe von maximal 100 nm aufweisen.

8. Verfahren nach einem der vorhergehenden Ansprüche,
**dadurch gekennzeichnet, dass**
als Trägerflüssigkeit (12) eine organische Lösung eingesetzt wird.

9. Verfahren nach einem der vorhergehenden Ansprüche,
**dadurch gekennzeichnet, dass**
der Volumenanteil der Nanoteilchen (14) in der Suspension (2) über 50% ist.

10. Verfahren nach einem der vorhergehenden Ansprüche,
**dadurch gekennzeichnet, dass**
die Suspension (2) ein Netzmittel aufweist.

11. Verfahren nach Anspruch 10,
**dadurch gekennzeichnet, dass**
der Massenanteil am Netzmittel in der Suspension (2)zwischen 0,1 und 1 g/l ist, insbesondere zwischen 0,2 und 0,6 g/l.

## Claims

1. Method of repairing a crack (4) in a component (8) comprising a base material (1) of a metal alloy, in particular in a gas turbine blade, comprising the following steps:
- a suspension (2), which comprises a carrier liquid (12) and at least one solid in the form of nanoparticles (14), is applied to the location to be repaired,
- a heat treatment of the component is carried out, the solid in the form of nanoparticles (14) being melted and a bond with the base material being formed,
**characterized**
**in that**, during the heat treatment, the component (8) is exposed to a thermal shock and
**in that** the duration of the thermal shock is less than 30 minutes and lies in particular between 5 minutes and 10 minutes.

2. Method according to Claim 1, **characterized in that**
the maximum temperature during the heat treatment is reached in the thermal shock, which maximum temperature lies below the melting temperature of the base material (10) .

3. Method according to Claim 2, **characterized in that**
the maximum temperature in the heat treatment lies between 50 K and 100 K below the melting temperature of the base material (10).

4. Method according to one of the preceding claims, **characterized in that**
a temperature increase of up to 100 K, and in particular in the range between 30 K and 70 K, is performed in the thermal shock.

5. Method according to one of the preceding claims, **characterized in that**
the thermal shock is carried out after reaching a temperature in the region of the solution annealing temperature.

6. Method according to Claim 1, **characterized in that**
the solid in the form of nanoparticles (14) consists of the same material as the base material (10).

7. Method according to one of the preceding claims, **characterized in that**
the nanoparticles (14) have a size of at most 100 nm.

8. Method according to one of the preceding claims, **characterized in that**
an organic solution is used as the carrier liquid (12).

9. Method according to one of the preceding claims, **characterized in that**
the volume fraction of the nanoparticles (14) in the suspension (2) is over 50%.

10. Method according to one of the preceding claims, **characterized in that**
the suspension (2) has a wetting agent.

11. Method according to Claim 10, **characterized in that**
the mass fraction of wetting agent in the suspension (2) is between 0.1 and 1 g/l, in particular between 0.2 and 0.6 g/l.

## Revendications

1. Procédé de réparation d'une fissure ( 4 ) dans un élément ( 8 ) ayant un matériau ( 10 ) de base en un alliage métallique,
notamment dans une aube de turbine à gaz,
comprenant les stades suivantes :
- on dépose sur l'endroit à réparer une suspension ( 2 ) qui comporte un liquide ( 12 ) porteur ainsi qu'au moins une matière solide sous la forme de nanoparticules ( 14 ),
- on effectue un traitement thermique de l'élément, la matière solide sous la forme de nanoparticules ( 14 ) étant fondue et une liaison avec la matière de base étant constituée,
**caractérisé**
**en ce que**, pendant le traitement thermique, on soumet l'élément ( 8 ) à un choc thermique et
**en ce que** la durée du choc thermique est inférieure à 30 minutes et est notamment comprise en 5 minutes et 10 minutes.

2. Procédé suivant la revendication 1,
**caractérisé en ce que**
lors du choc thermique on atteint la température maximum pendant le traitement thermique,
cette température maximum étant inférieure au point de fusion de la matière ( 10 ) de base.

3. Procédé suivant la revendication 2,
**caractérisé en ce que**
la température maximum lors du traitement thermique est comprise entre 50°K et 100°K en dessous du point de fusion de la matière ( 10 ) de base.

4. Procédé suivant l'une des revendications précédentes,
**caractérisé en ce que**
la différence de température lors du choc thermique s'effectue par une élévation de la température allant jusqu'à 100°K et notamment dans la plage comprise en 30°K et 70°K.

5. Procédé suivant l'une des revendications précédentes,
**caractérisé en ce que**
on effectue le choc thermique après avoir atteint une température de l'ordre de la température du recuit de mise en solution.

6. Procédé suivant la revendication 1,
**caractérisé en ce que**
la matière solide sous forme de nanoparticules ( 14 ) est en la même matière que la matière ( 10 ) de base.

7. Procédé suivant l'une des revendications précédentes,
**caractérisé en ce que**
les nanoparticules ( 14 ) ont une dimension de 100 nm au maxium.

8. Procédé suivant l'une des revendications précédentes,
**caractérisé en ce que**
on utilise une solution organique liquide ( 12 ) porteur.

9. Procédé suivant l'une des revendications précédentes,
**caractérisé en ce que**
par exemple la proportion en volume des nanoparticules ( 14 ) dans la suspension ( 2 ) est supérieure à 50%.

10. Procédé suivant l'une des revendications précédentes,
**caractérisé en ce que**
la suspension comporte un agent mouillant.

11. Procédé suivant la revendication 10,
**caractérisé en ce que**
la proportion en poids d'agent mouillant dans la suspension ( 2 ) est comprise entre 0,1 et 1 g/l en étant notamment comprise entre 0,2 et 0,6 g/l.
